Europäisches Patentamt

European Patent Office

Office européen des brevets

(11) Publication number: **0 128 769 B1**

# EUROPEAN PATENT SPECIFICATION

(45) Date of publication of patent specification: **22.05.91**   (51) Int. Cl.⁵: **H04N 7/16**

(21) Application number: **84303939.7**

(22) Date of filing: **11.06.84**

(54) **Address-programmable CATV converter.**

(30) Priority: **10.06.83 US 502934**

(43) Date of publication of application:
**19.12.84 Bulletin 84/51**

(45) Publication of the grant of the patent:
**22.05.91 Bulletin 91/21**

(84) Designated Contracting States:
**AT BE CH DE FR GB IT LI SE**

(56) References cited:
**EP-A- 0 019 286**
**WO-A-81/02961**
**GB-A- 2 118 750**

**JOURNAL OF ELECTRONIC ENGINEERING,
vol. 20, no. 202, October 1983, pages 77-79,
Tokyo, JP; H. OHYAMA: "Laying the ground-
work for two-way cable tv"**

**PATENTS ABSTRACTS OF JAPAN, vol. 6, no.
55 (E-101) [933], 10th April 1982; & JP - A - 56
169 485 (PIONEER K.K.) 26-12-1981**

(73) Proprietor: **GENERAL INSTRUMENT CORPO-
RATION**
**1775 Broadway**
**New York New York(US)**

(72) Inventor: **O'Brien, Thomas E., Jr.**
**804 Fairfield Drive**
**Warminster Pennsylvania 18974(US)**

(74) Representative: **Wright, Peter David John et al**
**R.G.C. Jenkins & Co. 26 Caxton Street**
**London SW1H 0RJ(GB)**

## Description

The present invention relates generally to cable television (CATV), and more particularly to a CATV converter into which address information can be down-loaded from the system headend.

In many modern cable television systems the system operator has the capability of communicating with the plurality of subscriber terminals that are connected via the cable to the system headend via a cable distribution system. In a typical cable system, each subscriber terminal is provided with a converter which is assigned a unique address that permits the headend to communicate with the subscriber to, for example, establish in the converter a program authorization code that determines which pay program or programs that subscriber will be able to receive. In many cable systems, the subscriber is also able to communicate with the headend in a two-way communication link, so as to permit each subscriber terminal to be interrogated or addressed from the headend to, for example, bill the subscriber for viewing special events or poll the subscriber as part of a survey or opinion poll. Such two-way communication also requires that each subscriber terminal be assigned a unique address to permit the headend to be able to identify that terminal either to which it is sending information or from which it is receiving information.

Moreover, particularly when a relatively large number of subscriber terminals are connected to a headend in a cable transmission system, it is highly advantageous, in terms of saving time, for the headend to be able to address the subscriber terminals in a numerical sequence. This would enable, for example, successively numbered subscriber terminals to be addressed in sequence simply by modifying one or two of the least significant bits of the address code for each subscriber terminal, rather than as many as 21 bits, which may be required when addressing is performed in a nonsequential manner.

The subscriber terminal address is conventionally stored in a programmable read-only-memory (PROM) at or prior to the time the converter is installed at the subscriber's home. This is done in the field by the installer by the use of a PROM programmer. The installer programs the PROM with the preassigned logical address for that subscriber and installs the PROM into a socket provided for the PROM in the subscriber's converter. The subscriber terminal address may also be programmed to store the subscriber's address by cutting selected jumper wires or by operating a series of switches to establish the desired address code in the PROM.

This procedure is, however, time-consuming and costly and inefficient, and must be repeated in the field each time a new converter is installed at a subscriber's home. In addition, it is difficult for the system operator to keep accurate records of the addresses that have been allocated or assigned to the subscribers on the system.

An example of a known CATV system can be found in WO-A-8102961 (TOCOM INC) which describes the control of transmission of television program and data signals to a plurality of user stations (ie. converters). Each converter includes a memory in which are stored a number of data codes including a code identifying the converter and codes representing certain technical aspects of the converter. These codes uniquely identify the converter and do not require changing in the normal operation of the system. The converter includes a microprocessor which controls the operation of the converter and hence access to transmitted programs and the like. The microprocessor is controlled by control data which is transmitted from the headend of the system together with an identification code. On receipt of data from the headend, the received identification code is compared with the identifying code stored in the converters memory and where a predetermined relationship (ie. a match) is found between these codes the control data is used to control the microprocessor.

While the system described in the abovementioned patent application provides a means by which converters in a CATV system can be programmed remotely from the systems headend, it does not adequately solve the abovementioned and associated problems.

According to the invention therefore there is provided an address programmable converter for use in a television transmission system, the converter comprising receiver means adapted for receiving signals transmitted from the headend of the said system and for extracting data from those signals, memory means for storing a unique code identifying the converter and for storing said extracted data, and processing means responsive to said extracted data for controlling operation of the converter, as is known for example from WO-A-810296l, the invention being characterised in that said extracted data comprises a first transmitted data set including a converter identification code and an associated first logical address code and a second transmitted data set including a second logical address code and associated converter control data and in that said processing means is arranged to be responsive to a first predetermined relationship between said unique code and said converter identification code for storing said first transmitted logical address code and to be responsive to a second predetermined relationship between the thus stored first logical address code and said second transmitted logical address code for storing said converter control data, thereby to enable said processing means to be programmed from the headend to control the converter to prevent unauthorised reception of television signals transmitted in the television transmission system.

In one aspect of an embodiment the present invention, to be described in greater detail hereinafter, there is provided an addressable converter adapted to be connected to a cable, said converter comprising data-storage means and processing means for receiving a plurality of different converter address codes from the cable, said processing means including means for recognising one of said address codes uniquely assigned to that converter and for storing the recognised one of said address codes into said data-storage means.

More specifically, the embodiment to be described provides an addressable converter comprising a first memory for storing a converter identification code and a second memory code receiving means adapted to receive a coded signal containing a converter identification code and a unique logical address code assigned to that converter, and processing means connected to said code receiving means and to said first and second memories and comprising means for operatively comparing the received identification code and the identification code stored in said first memory and effective upon the detection of a predetermined relationship between the received and stored identification codes to store the received logical address code into said second memory.

The embodiment also extends to a two-way cable television distribution network comprising a headend, a cable, and a plurality of remote subscriber terminals connected via said cable to said headend, each of said subscriber terminals including an addressable converter which is identified by a unique identification code, the headend comprising code transmitting means for transmitting along said cable coded signals including at least one of said converter identification codes and an address code uniquely assigned to that converter, the converter including a memory and processing means for receiving the transmitted code signal from said headend and for permanently storing the received address code in said memory upon recognition of its associated identification code.

Hereinafter described is an exemplary addressable CATV converter embodying the invention which includes a programmable read-only memory in which a unique identification code for the converter is stored, and a random-access memory (RAM) which can be programmed with the unique assigned converter address after the converter is installed at the subscriber location. The converter includes a data receiver which, when the converter is connected to the cable receives from the headend a unique preassigned address code corresponding to a unique identification code stored in a PROM of the converter. When the identification code stored in the converter PROM is matched at the converter with the received identification code, the unique preassigned address code is stored into the converter RAM, thereby to enable the headend thereafter to communicate efficiently with the converter.

As will be appreciated from the following, the present invention provides an addressable converter, which, when a plurality are employed in a single cable transmission system, allows the converter to be given sequential address codes without the converter having to be mechanically handled or mechanically modified after its manufacture.

Further features of the invention are set forth with particularity in the appended subordinate claims.

The invention, together with features and advantages thereof, will be more clearly understood from consideration of the following description of an exemplary embodiment which is illustrated in the accompanying drawings in which:

Fig. 1 is a schematic block diagram of a CATV headend for use with the programmable converter of the invention;

Fig. 2 is a schematic block diagram of a programmable converter in accordance with an embodiment of the invention;

Fig. 3 is a flow chart of the initialization sequence used in programming the converter;

Fig. 4 illustrates the format of the data employed to down load or program a logical address and site code into the converter; and

Fig. 5 illustrates various communication signals in the time domain utilized in the present invention, wherein Fig. 5a is the system clock, Fig. 5b is the data word format, Fig. 5c is the data frame format, Fig. 5d is a Manchester encoded data frame, and Fig. 5e is the frequency shift keyed (FSK) modulated signal.

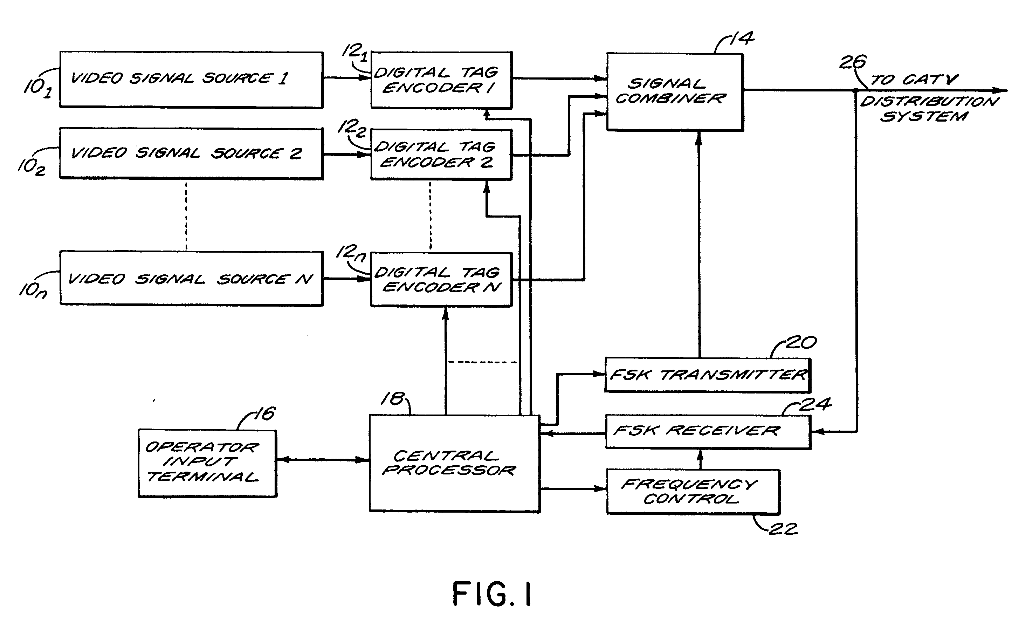

The addressable CATV converter of the invention is programmed or downloaded with a unique preassigned logical address from a headend, which may be of the form illustrated schematically in Fig. 1. As therein shown, the headend includes, as is conventional, a plurality of video signal sources $10_1$; $10_2...10_n$, the outputs of which are respectively connected to a corresponding plurality of digital tag encoders $12_2$, $12_2... 12_n$, each of which respectively adds a program-identification tag to the video signal outputs of the video signal sources 10. The outputs of the digital tag encoders 12 are applied to the inputs of a signal combiner 14.

The headend of Fig. 1 also includes an operator input computer terminal 16, into which an operator may manually input or type information concerning CATV converters at subscriber locations that are to be connected to the headend through a two-way cable system. Such information includes, for example, the date of installation of the converter; the serial number of the converter; the name and address of the subscriber; the services that are to be allowed to the subscriber, such as HBO or the like; privileges that are to be allowed to the subscriber such as credit and payment for special events to be viewed; and the like.

The information from input terminal 16 is applied to and stored in a central controller or processor 18, which, among its several functions, assigns a digital program tag to each of the digital tag encoders 12. The processor 18 is also programmed to assign for each subscriber converter a unique logical address. The subscriber address may be assigned to the various converters in the system in chronological or sequential order, that is, in the order of their installation.

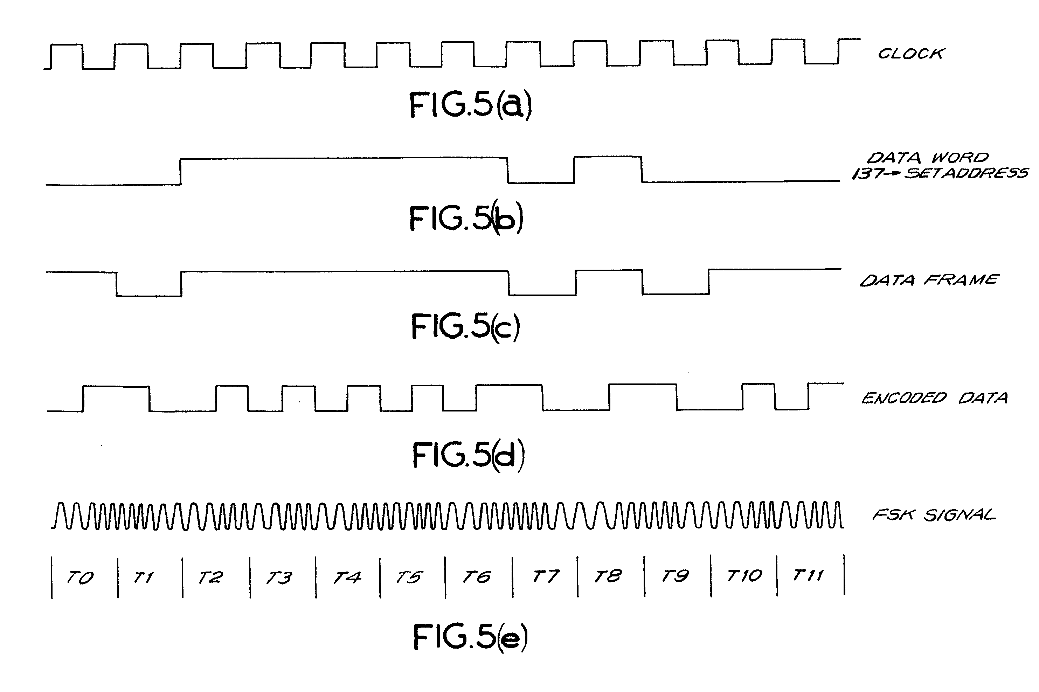

An output of processor 18 is applied to an input of an FSK transmitter 20, and the other output of processor 18 is applied to a frequency control circuit 22, which controls the local-oscillator frequency of an FSK receiver 24. FSK transmitter 20 produce a Manchester-encoded FSK signal (Fig. 5e), which contains data including logical address codes that are to be transmitted to the converters. The output of FSK transmitter 20 is applied to an input of signal combiner 14. The output of signal combiner 14, which includes the video signals from sources 10 modulated on one group of carrier frequencies, and the FSK signal on another carrier is applied to the two-way CATV distribution system 26 on which the signals are transmitted to the various subscriber terminals. The input to the FSK receiver 24, which receives return information from the subscriber terminals, is connected to the CATV distribution system 26 and its output is applied to the headend central processor 18.

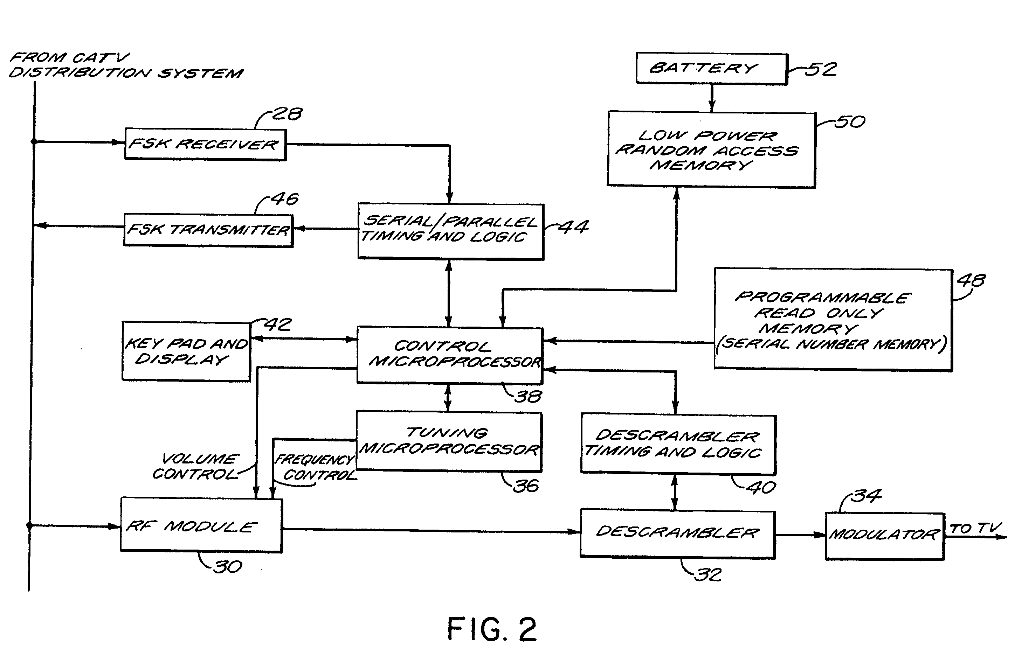

Each of the subscriber terminals connected to the headend via CATV distribution system 26 includes an addressable converter, one of which, embodying features of the present invention, is illustrated in Fig. 2. As therein shown, the converter includes an FSK receiver 28 and an rf module 30 each of which has an input connected via the cable to the two-way distribution system 26. Module 30 detects and demodulates the selected video signal to baseband and applies the baseband scrambled video to a descrambler 32. The latter descrambles the scrambled video and applies an unscrambled video signal at baseband to a modulator 34 in which the descrambled video modulates a carrier at the converter output channel frequency. The output of modulator 34 is applied to the subscriber's television receiver. The signal selection at module 30 is effected by a frequency control signal applied to module 30 from a tuning microprocessor 36, which, in turn, is connected to the converter's control microprocessor 38.

The latter is also adapted to have stored therein an authorisation code which allows the subscriber to receive certain programs as identified by the program identification tags added at the headend to the transmitted video signals by the encoders 12. The authorization code is loaded in microprocessor 38 following the assignment of a logical address code to the converter, as described in greater detail below. Microprocessor 38 also provides a volume control signal to rf module 30 and a descramble control signal to a descrambler timing and logic circuit 40, which provides descrambling control signals to descrambler 32. Control microprocessor 38 receives a program select signal from a keypad 42 from which it, in conjunction with microprocessor 36, generates the frequency control signal to rf module 30. Microprocessor 38 provides display 42 with information allowing the selected channel to be displayed.

The control microprocessor 38 receives signals from and provides signals to a serial/parallel timing and logic circuit 44, which, in turn, receives the coded demodulated output from FSK receiver 28. Circuit 44 converts the serial binary data from the FSK receiver to parallel binary data and applies that data to control microprocessor 38. To transmit return data back to the headend from the converter of Fig. 2, control microprocessor 38 provides data through timing and logic circuit 44 to an FSK transmitter 46. The latter modulates the converter binary data onto an rf carrier and transmits the resulting FSK signal along the CATV distribution system 26 back to the FSK receiver 24 at the headend.

The converter as thus far described with respect to Fig. 2 is per se conventional and its conventional features accordingly will not be further described herein. However, the converter of Fig. 2, in addition, can be programmed from the remote headend to download or store into the converter a unique logical address as well as other information.

To this end, each converter at the time of its fabrication is assigned a serial number which is stored in a programmable read-only memory (ROM) 48 connected to an input of control microprocessor 38. The converter of the invention also includes a low-power CMOS static random-access memory (RAM) 50, which receives operating power and a supply voltage from a battery 52. In a manner to be described below, a unique logical address code, as well as, if desired, a site code and other information concerning that subscriber, such as purchase records, authorizations, and cross-reference tables, can be downloaded from the headend and stored in memory 50 to allow the headend to engage in two-way communication with the subscriber terminal based on an ability to interrogate and recognize the latter's unique logical address. The permanent connection of the battery 52 to memory 50 ensures the non-volatile storage of that information in the converter.

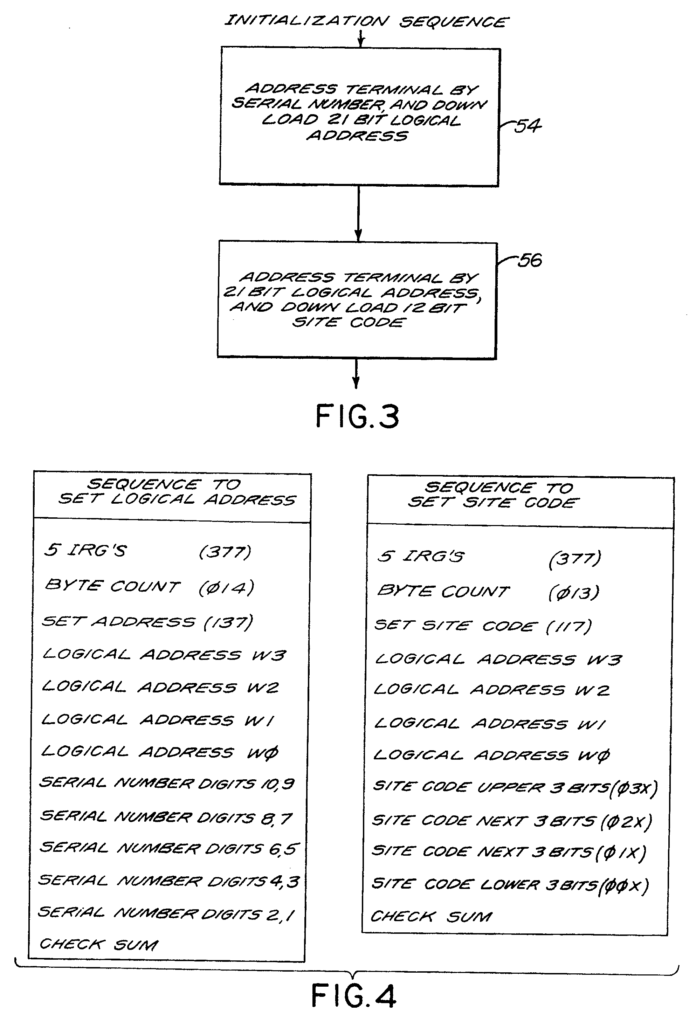

Whenever a converter is to be installed at a remote subscriber location, the central processor 18 at the headend supplies the preassigned address and associated serial number code for the subscriber to FSK transmitter 20. Transmitter 20 transmits an FSK address set command signal (Fig. 5e), which includes, as shown in the lefthand column of Fig. 4, described in greater detail below, the logical address signal for the converter consisting of 8-bit bytes $W_0$, $W_1$, $W_2$ and $W_3$, and bytes representing the ten digits of the serial number for that converter along with the set address code. That signal is decoded in converter FSK receiver 28, converted into parallel binary form in logic circuit 44, and stored in control microprocessor 38.

Control microprocessor 38 compares the received serial number code and the serial number stored therein. When a match between the received and stored serial number codes is detected microprocessor 38 causes the logical address code associated with the received serial number code to be stored in memory 50. Once the logical address code has been stored in memory 50 as at step 54 in the flow chart of Fig. 3, the headend then, as at step 56, may address the subscriber terminal by its address and transmit a signal having set site code signal, which has the format shown in the righthand column of Fig. 4 including the address code and the site code. The site code can also be stored in memory 50 along with the converter's unique logical address and other codes such as a program authorization code, that are either unique to that converter or, as in the case of the site code, common to all converters in the system.

The site code stored in the memory 50 of each converter in the system is employed as a security measure. In operation, the headend transmits periodically to each subscriber terminal a signal that contains the system site code, which is compared to the stored site code in each converter. If the transmitted and stored site codes do not match, the control microprocessor 38 in each converter erases the logical address code previously stored in memory 50 so that the subscriber terminal is recognized as containing an unauthorized (e.g. stolen) converter, and all programming to that subscriber is thereafter disabled since the video signal cannot be descrambled at the subscriber terminal.

The commands and data transmitted from the headend to the programmable converter are preferably in the form of a sequence of 8-bit bytes. As shown in Fig. 4, the set logical address signal begins with five 8-bit IRG bytes, shown in octal form as 377 or all "ones" in binary form, which synchronize all converters which are to receive the set address command signals. This is followed by a byte count signal, indicating the number of bytes in the command signal, and then by the set address instruction code. This, in turn, is followed by the four logical address bytes $W_3$, $W_2$, $W_1$ and $W_0$, and the serial number bytes. The signal concludes with a check sum byte, which instructs the converter microprocessor to check to determine if the previous address data has been accurately received. Similarly, the set site code command signal includes the five IRG bytes and a byte count signal followed by the set site code byte, and the logical address and site code bytes. A check sum byte is also included to serve as an accuracy check.

Fig. 5 illustrates the manner in which an 8-bit byte signal may be transmitted from the headend to the subscriber terminals in the present system. The specific example illustrated is a command (set address) issued from the headend to all subscriber converters to store the logical address code in the converter memory in the manner described above. Fig. 5a is the system clock at approximately 13.895KHZ, which may be conveniently generated by binary division of a 3.58 mHz color subcarrier signal, which is generated using an available, mass-produced color TV crystal. Fig. 5b represents the command code 137 or 01 011 111 in binary code. The 8 bits of the command code occur in 8 time intervals, T2 through T9 with the least significant bit occurring first in time interval T2. Fig. 5c shows the data frame format containing the command message. The data frame includes a start bit during time interval T1, an odd parity bit during time interval T10, and a stop bit during time interval T11.

Fig. 5d is a Manchester encoded signal wherein the clock signal of Fig. 3a is combined with the data frame signal of Fig. 5c. The Manchester-encoded signal is generated by an exclusive or logic function between a clock (Fig. 5a) and the data frame (Fig. 5c). The clock and data are integrated in such manner that there is a waveform transition in the middle of each bit interval. An upward transition (from logic 0 to logic 1) in the middle of a bit interval indicates a logic 1, whereas a downward transition (from logic 1 to logic 0) indicates a logical 0. The Manchester-encoded FSK signal (Fig. 5e) transmitted by FSK transmitter 20 in the headend may be at a frequency of 106.5 mHz (in the f.m. band).

It will be appreciated that the unique logical address code and common site code of all converters can be programmed from the remote headend without any mechanical handling or modification to the converter as was required in the prior art addressable converters. It will also be appreciated that other information specific to a converter or common to all converters in the system can also be transmitted from the headend to the converter based on the ability of the headend to communicate with and identify the converter in which a unique address has been stored. It will also be appreciated that once configured with a unique logical address in accordance with this invention, the converter may receive information from the headend in the general format of sequential address values instead of widely dispersed values as would be associated with serial numbers, thereby providing greatly increased efficiency of operations between the headend and subscriber terminals. Finally, it will be appreciated that whereas the invention has been hereinabove described with reference to a presently preferred embodiment thereof, modifications may be made thereto without necessarily departing from the scope of the invention as defined by the appended claims.

## Claims

1. An address programmable converter for use in a television transmission system, the converter comprising receiver means (28, 44) adapted for receiving signals transmitted from the headend of the said system and for extracting data from those signals, memory means (48, 50) for storing a unique code identifying the converter and for storing said extracted data, and processing means (38) responsive to said extracted data for controlling operation of the converter, characterised in that said extracted data comprises a first transmitted data set including a converter identification code and an associated first logical address code and a second transmitted data set including a second logical address code and associated converter control data, and in that said processing means (38) is arranged to be responsive to a first predetermined relationship between said unique code and said converter identification code for storing said first transmitted logical address code and to be responsive to a second predetermined relationship between the thus stored first logical address code and said second transmitted logical address code for storing said converter control data, thereby to enable said processing means to be programmed from the headend to control the converter to prevent unauthorised reception of television signals transmitted in the television transmission system.

2. A converter as claimed in claim 1, characterised in that said memory means comprises a first memory (48) for storing said unique code and a second memory (50) for storing said extracted data.

3. A converter as claimed in claim 2, characterised in that said second memory (50) comprises a low-power static random-access memory connected to a power source for applying an operating voltage thereto.

4. A converter as claimed in any preceding claim, characterised in that said first memory comprises a programmable read only memory (48) for storing a serial number representing the unique code identifying the converter.

5. A converter as claimed in any preceding claim, characterised in that said receiver means comprises a frequency shift keying (FSK) receiver (28) for decoding data signals transmitted over the system and logic means (44) for converting such decoded data into a format suitable for delivery to said processing means (38).

6. A converter as claimed in claim 5, characterised in that decoded data is converted from a serial binary format to a parallel binary format.

7. A converter as claimed in any preceding claim, characterised in that said processing means (38) is arranged to control operation of an RF module (30) adapted for receiving video signals transmitted from the headend and descrambling means (32) for descrambling said received video signals to enable said video to be displayed on a television monitor.

8. A cable television system comprising a headend, and characterised in that said system further comprises at least one converter as claimed in any one of the preceding claims.

9. A cable television system as claimed in claim 8, characterised in that the headend of the system comprises code transmitting means (20) for transmitting signals to said at least one converter.

10. A method of programming a converter of the type claimed in any of claims 1 to 7, the method comprising the steps of storing a unique code identifying the converter in the memory means (48, 50) of the converter and being characterised by the steps of transmitting a converter identification code and associated first logical address code to be received by the converter and storing the first logical address code in the memory means (48, 50) of the converter in response to a first predetermined relationship between said unique code and said converter identification code, and transmitting a second logical address code and associated converter control data to be received by the converter and storing the converter control data in the memory means (48, 50) of the converter in response to a second predetermined relationship between the thus stored first logical address code and said second transmitted logical address code, thereby to program the converter to prevent unauthorised reception of television signals by the converter.

## Revendications

1. Convertisseur programmable par adressage destiné à être utilisé dans un système de transmission par télévision, le convertisseur comprenant des moyens formant récepteur (28, 44) aptes à recevoir des signaux transmis depuis la tête du réseau dudit système et à extraire des données à partir de ces signaux, des moyens formant mémoire (48, 50) pour enregistrer un code unique identifiant le convertisseur et pour enregistrer lesdites données extraites, et des moyens de traitement (38) réagissant auxdites données extraites pour commander le fonctionnement du convertisseur, caractérisé en ce que lesdites données extraites se composent d'une première série de données transmises comprenant un code d'identification de convertisseur et un premier code d'adresse logique associé et d'une seconde série de données transmises comprenant un second code d'adresse logique et des données de commande de convertisseur associées, et en ce que lesdits moyens de traitement (38) sont prévus en vue de réagir à une première relation prédéterminée entre ledit code unique et ledit code d'identification de convertisseur en vue d'enregistrer ledit premier code d'adresse logique transmis et de réagir à une seconde relation prédéterminée entre le premier code d'adresse logique ainsi enregistré et ledit second code d'adresse logique transmis en vue d'enregistrer lesdites données de commande de convertisseur, ce qui permet auxdits moyens de traitement d'être programmés depuis la tête du réseau pour commander le convertisseur afin d'empêcher la réception non autorisée de signaux de télévision transmis dans le système de transmission de télévision.

2. Convertisseur selon la revendication 1, caractérisé en ce que lesdits moyens formant mémoire se composent d'une première mémoire (48) pour enregistrer ledit code unique et d'une seconde mémoire (50) pour enregistrer lesdites données extraites.

3. Convertisseur selon la revendication 2, caractérisé en ce que ladite seconde mémoire (50) se compose d'une mémoire à accès sélectif statique de faible puissance reliée à une source d'alimentation servant à lui appliquer une tension de fonctionnement.

4. Convertisseur selon l'une quelconque des revendications précédentes, caractérisé en ce que ladite première mémoire se compose d'une mémoire morte programmable (48) servant à enregistrer un numéro de série représentant le code unique identifiant le convertisseur.

5. Convertisseur selon l'une quelconque des revendications précédentes, caractérisé en ce que lesdits moyens formant récepteur comprennent un récepteur à modulation par déplacement de fréquence (FSK) (28) destiné à décoder des signaux de données transmis sur le système et des moyens logiques (44) servant à convertir de telles données décodées en un format approprié à leur réception par lesdits moyens de traitement (38).

6. Convertisseur selon la revendication 5, caractérisé en ce que les données décodées sont converties d'un format binaire série en un format binaire parallèle.

7. Convertisseur selon l'une quelconque des revendications précédentes, caractérisé en ce que lesdits moyens de traitement (38) sont prévus de façon à commander le fonctionnement d'un module RF (30) apte à recevoir des signaux vidéo transmis depuis la tête de réseau et des moyens de désembrouillage (32) servant à désembrouiller lesdits signaux vidéo reçus pour permettre l'affichage desdits signaux vidéo sur un écran de télévision.

8. Système de télévision par câble comprenant une tête de réseau, et caractérisé en ce que ledit système comprend en outre au moins un convertisseur tel que revendiqué dans l'une quelconque des revendications précédentes.

9. Système de télévision par câble selon la revendication 8, caractérisé en ce que la tête de réseau du système comprend des moyens de transmission de code (20) servant à transmettre des signaux audit convertisseur au nombre d'au moins un.

10. Procédé de programmation d'un convertisseur du type revendiqué dans l'une quelconque des revendications 1 à 7, le procédé comprenant les étapes consistant à enregistrer un code unique identifiant le convertisseur dans les moyens formant mémoire (48, 50) du convertisseur et étant caractérisé par les étapes consistant à transmettre un code d'identification de convertisseur et un premier code d'adresse logique associé devant être reçu par le convertisseur et à enregistrer le premier code d'adresse logique dans les moyens formant mémoire (48, 50) du convertisseur en réponse à une première relation prédéterminée entre ledit code unique et ledit code d'identification du convertisseur, et à transmettre un second code d'adresse logique et des données de commande de convertisseur associées devant être reçus par le convertisseur et à enregistrer lesdites données de commande de convertisseur dans les moyens formant mémoire (48, 50) du convertisseur en réponse à une seconde relation prédéterminée entre le premier code d'adresse logique ainsi enregistré et ledit second code d'adresse logique transmis, afin de programmer ainsi le convertisseur pour empêcher la réception non autorisée de signaux de télévision par le convertisseur.

**Ansprüche**

1. Adreßprogrammierbarer Kabelfernsehumsetzer zur Verwendung in einem Fernsehübertragungssystem, welcher Umsetzer aufweist: eine Empfangseinrichtung (28, 44), die zum Empfangen von Signalen von der Hauptstelle des Systems und zum Gewinnen von Daten aus diesen Signalen ausgebildet ist, eine Speichereinrichtung (48, 50) zum Speichern eines eindeutigen Kodes, der den Umsetzer identifiziert und zum Speichern der gewonnenen Daten, und eine Verarbeitungseinrichtung (38), die auf die gewonnenen Daten anspricht, um den Betriebsablauf des Umsetzers zu steuern, **dadurch gekennzeichnet, daß** die gewonnenen Daten einen ersten Satz gesendeter Daten einschließlich einem Umsetzeridentifizierkode und einem zugeordneten ersten logischen Adreßkode und einen zweiten Satz gesendeter Daten mit einem zweiten logischen Adreßkode und zugeordneten Umsetzersteuerdaten aufweisen, und daß die Verarbeitungseinrichtung (38) so ausgebildet ist, daß sie auf eine erste vorgegebene Beziehung zwischen diesem eindeutigen Kode und dem Umsetzeridentifizierkode anspricht, um den ersten gesendeten logischen Adreßkode zu speichern, und auf eine zweite vorgegebene Beziehung zwischen dem so gespeicherten ersten logischen Adreßkode und dem zweiten übertragenen logischen Adreßkode anspricht, um die Umsetzersteuerdaten zu speichern, um es dadurch zu ermöglichen, daß die Verarbeitungseinrichtung von der Hauptstelle programmiert wird, um den Umsetzer zu steuern und unerlaubtes Empfangen von Fernsehsignalen zu verhindern, die im Fernsehübertragungssystem übertragen werden.

2. Umsetzer nach Anspruch 1, **dadurch gekennzeichnet, daß** die Speichereinrichtung einen ersten Speicher (48) zum Speichern des eindeutigen Kodes und einen zweiten Speicher (50) zum Speichern der gewonnenen Daten aufweist.

3. Umsetzer nach Anspruch 2, **dadurch gekennzeichnet, daß** der zweite Speicher (50) einen statischen RAM mit niederer Leistungsaufnahme aufweist, der an eine Spannungsquelle zum Zuführen von Betriebsspannung an ihn angeschlossen ist.

4. Umsetzer nach einem der vorstehenden Ansprüche, **dadurch gekennzeichnet, daß** der erste Speicher einen PROM (48) zum Speichern einer Seriennummer aufweist, die den eindeutigen Kode darstellt, der den Umsetzer identifiziert.

5. Umsetzer nach einem der vorstehenden Ansprüche, **dadurch gekennzeichnet, daß** die Empfangseinrichtung einen FSK(Frequency Shift Keying = Frequenzumtastung)-Empfänger (28) zum Dekodieren von Datensignalen, die über das System übertragen werden, und eine Logikeinrichtung (44) aufweist, zum Umwandeln der dekodierten Daten in ein Format, das für ein Weiterliefern an die Verarbeitungseinrichtung (38) geeignet ist.

6. Umsetzer nach Anspruch 5, **dadurch gekennzeichnet, daß** die dekodierten Daten von einem seriellen Binärformat in ein paralleles Binärformat umgesetzt werden.

7. Umsetzer nach einem der vorstehenden Ansprüche, **dadurch gekennzeichnet, daß** die Verarbeitungseinrichtung (38) so ausgebildet ist, daß sie den Betriebsablauf eines HF-Moduls (30) steuert, der so ausgebildet ist, daß er Videosignale empfängt, die von der Hauptstelle gesendet werden, und eine Descrambler-Einrichtung (32) zum Entschlüsseln der empfangenen Videosignale, damit das Videosignal auf einem Fernsehmonitor dargestellt werden kann.

8. Kabelfernsehsystem mit einer Hauptstelle und **dadurch gekennzeichnet**, daß das System weiterhin mindestens einen Umsetzer gemäß einem der vorstehenden Ansprüche aufweist.

9. Kabelfernsehsystem nach Anspruch 8, **dadurch gekennzeichnet**, daß die Hauptstelle des Systems eine Kodesendeeinrichtung (20) zum Senden von Signalen zu dem mindestens einen Umsetzer aufweist.

10. Verfahren zum Programmieren eines Umsetzers des Typs, wie er in einem der Ansprüche 1 bis 7 beansprucht ist, welches Verfahren den Schritt des Speicherns eines eindeutigen Kodes, der einen Umsetzer identifiziert, in der Speichereinrichtung (48, 50) des Umsetzers aufweist, und die durch folgende Schritte **gekennzeichnet** ist: Senden eines Umsetzeridentifizierkodes und eines zugeordneten ersten logischen Adreßkodes, die vom Umsetzer zu empfangen sind, und Speichern des ersten logischen Adreßkodes in der Speichereinrichtung (48, 50) auf eine erste vorgegebene Beziehung zwischen dem eindeutigen Kode und dem Umsetzeridentifizierkode hin, und Senden eines zweiten logischen Adreßkodes und zugehöriger Umsetzersteuerdaten, die vom Umsetzer zu empfangen sind, und Speichern der Umsetzersteuerdaten in der Speichereinrichtung (48, 50) des Umsetzers auf eine zweite vorgegebene Beziehung zwischen dem so gespeicherten ersten logischen Adreßkode und dem zweiten gesendeten logischen Adreßkode hin, um dadurch den Umsetzer zum Verhindern unzulässigen Empfangs von Fernsehsignalen durch den Umsetzer zu programmieren.

FIG. I

EP 0 128 769 B1

FIG. 2

INITIALIZATION SEQUENCE

ADDRESS TERMINAL BY
SERIAL NUMBER, AND DOWN
LOAD 21 BIT LOGICAL
ADDRESS — 54

ADDRESS TERMINAL BY — 56
21 BIT LOGICAL ADDRESS,
AND DOWN LOAD 12 BIT
SITE CODE

# FIG.3

| SEQUENCE TO SET LOGICAL ADDRESS | SEQUENCE TO SET SITE CODE |
|---|---|
| 5 IRG'S          (377) | 5 IRG'S          (377) |
| BYTE COUNT  (Ø14) | BYTE COUNT     (Ø13) |
| SET ADDRESS (137) | SET SITE CODE (117) |
| LOGICAL ADDRESS W3 | LOGICAL ADDRESS W3 |
| LOGICAL ADDRESS W2 | LOGICAL ADDRESS W2 |
| LOGICAL ADDRESS WI | LOGICAL ADDRESS WI |
| LOGICAL ADDRESS WØ | LOGICAL ADDRESS WØ |
| SERIAL NUMBER DIGITS 10,9 | SITE CODE UPPER 3 BITS (Ø3X) |
| SERIAL NUMBER DIGITS 8,7 | SITE CODE NEXT 3 BITS (Ø2X) |
| SERIAL NUMBER DIGITS 6,5 | SITE CODE NEXT 3 BITS (Ø1X) |
| SERIAL NUMBER DIGITS 4,3 | SITE CODE LOWER 3 BITS (ØØX) |
| SERIAL NUMBER DIGITS 2,1 | CHECK SUM |
| CHECK SUM | |

# FIG.4

FIG.5(a)

CLOCK

FIG.5(b)

DATA WORD
137→SET ADDRESS

FIG.5(c)

DATA FRAME

FIG.5(d)

ENCODED DATA

| T0 | T1 | T2 | T3 | T4 | T5 | T6 | T7 | T8 | T9 | T10 | T11 |

FIG.5(e)

FSK SIGNAL

EP 0 128 769 B1